# EUROPEAN PATENT SPECIFICATION

(11) **EP 1 807 339 B1**
(45) Date of publication and mention of the grant of the patent: **17.08.2011**
(21) Application number: 05799435.2
(22) Date of filing: 18.10.2005
(51) Int. Cl.: B66F 7/14, F16H 25/24, F16H 25/22, B66F 7/28, E04G 1/24, E04G 1/00

(54) **LOAD DISPLACEMENT APPARATUS**
LASTVERSCHIEBUNGSVORRICHTUNG
APPAREIL DE DEPLACEMENT DE CHARGES

(30) Priority: 19.10.2004 US 619869 P
(43) Date of publication of application: 18.07.2007
(73) Proprietor: Delaney Machinerie Inc., L'Assomption, QC J5W 2T9 (CA)
(72) Inventor: Delaney, Francois, L'assomption, Quebec J5W 1H7 (CA)
(74) Representative: Lenne, Laurence
(86) International application number: PCT/CA2005/001604
(87) International publication number: WO 2006/042402

(56) References cited:
- US-A- 306 453
- US-A- 306 453
- US-A- 1 539 761
- US-A- 1 539 761
- US-A- 1 953 772
- US-A- 1 953 772
- US-A- 4 541 297
- US-A- 5 636 705
- US-A- 5 636 705
- US-A- 6 095 285
- US-A- 6 095 285

## Description

### FIELD OF THE INVENTION

The present invention relates to load displacement systems and is more particularly concerned with a load displacement apparatus and the components used in the displacement mechanism thereof for longitudinal displacement of a load along a structure as in scaffoldings.

### BACKGROUND OF THE INVENTION

It is well known in the art to use different lifting mechanisms in scaffoldings. Known scaffolding systems, and other types of load displacement systems, include a work platform or the like that is displaceable along a tower or the like. All these existing load displacement systems have technical problems associated therewith, as described hereinbelow.

Some towers support a plurality of work platforms, each carrying its own lifting mechanism. Furthermore, when the uppermost work platform needs to go back down, all platforms underneath obviously need to go down first, which is relatively expensive and inefficient. Most of the lifting mechanisms offer relatively slow platform displacement speeds in the order of a few (about 1 to 2) meters (about 2 to 5 feet) per minutes which is really time consuming when the platform needs to be raised at and lowered from a few hundred meters (feet) high. Furthermore, the lifting mechanisms usually need additional safety mechanisms to prevent any possible free fall of the platforms. Lifting mechanisms using rollers meshing with a worm screw are subject to surface wear at the contacting interface there between and are limited to their loading capacity by the roller shafts and their support bearings. Furthermore, they suffer drawbacks from the tedious alignment of the rollers required in assembly. An example of such a prior art lifting mechanism is disclosed in USP 5,636,705 in which a series of stud-mounted rollers is provided on a support structure for sequential meshing engagement with a drive screw, such an arrangement being subject to the potential disadvantages discussed above.

Load displacement mechanisms that use balls into conventional ball screw systems as load carriers are typically expensive to manufacture and in maintenance. Accordingly, the balls of the ball screw circulate inside a loop that cycles around at least one complete turn (360°) of the screw thread; which is relatively complex in manufacturing.

Accordingly, there is a need for an improved load displacement apparatus with a simple configuration and improved components used therefor.

### SUMMARY OF THE INVENTION

It is therefore a general object of the present invention to provide an improved load displacement apparatus with a simple configuration and/or improved components used therefore that solves the above-mentioned problems.

An advantage of the present invention is that the load displacement apparatus has ball bearing blocs, mounted on a structure, that are successively engaged by a screw device and that support the latter over only an angular (arc) segment thereof that typically varies between about ten and about sixty-five degrees.

Another advantage of the present invention is that the load displacement apparatus could never end up in a free fall.

A further advantage of the present invention is that the load displacement apparatus (lifting mechanism) has a speed range from about 0.3 to about 100 meters (about 1 to about 300 feet) per minute.

Still another advantage of the present invention is that the load displacement apparatus can be programmable to stop at different predetermined locations along the tower.

Another advantage of the present invention is that the load displacement apparatus is easily adaptable to existing load displacement or scaffolding systems because of compactness, existing platforms and along existing towers or simple beams having support blocs attached thereto.

Still a further advantage of the present invention is that the lifting mechanism is about 85% efficient when non-lubricated and about 95% when lubricated.

According to an aspect of the present invention, there is provided a load displacement apparatus for displacing a mobile component along an elongate fixed structure, said apparatus comprising:
- a worm screw mountable on the mobile component for rotation about a screw axis; and
- a plurality of support blocs mountable on the structure, said support blocs being spaced apart from one another along the structure to be successively in meshing engagement with said worm screw for movably supporting the mobile component along the structure, characterised in that each said support bloc includes a plurality of freely movable bearing balls, said bearing balls located within a closed-loop ball path channel formed into said support bloc and defining a contacting portion thereof spanning over and in register with an arc segment of the worm screw, at least one of said plurality of bearing balls successively and movably engaging said worm screw over said arc segment thereof.

Typically, a bottom wall of said closed-loop ball path channel is profiled.

Conveniently, the contacting portion of said bottom wall is raised relative to the remaining portion thereof so as to allow only said bearing balls located over said contacting portion to be in meshing engagement with said worm screw.

Conveniently, the contacting portion of said bottom wall is spaced from the remaining portion thereof by an upward slope section and a downward slope section located therebetween, said contacting portion with said upward and downward slope sections forming a front section of said closed-loop ball path channel.

Conveniently, at least a top portion of the bearing balls located within said front section of said closed-loop ball path channel are exposed to selectively contact said worm screw.

In one embodiment, each said support bloc includes a lower section and an upper section, said closed-loop ball path channel being formed at least partially within said lower section, said upper section at least partially covering said closed-loop ball path channel.

Typically, the upper section extends laterally beyond said lower section for protection of said plurality of bearing balls against weather conditions.

Conveniently, the upper section is shaped so as to follow a shaped thread of said worm screw.

In one embodiment, the apparatus further includes an actuator mechanism connecting to said worm screw for selectively actuating rotation thereof.

In one embodiment, the worm screw is a hollow screw, said actuator mechanism mounting inside said hollow screw for selective actuation thereof.

In one embodiment, the worm screw includes at least one thread helically extending therearound, said thread having an arcuate recess extending inwardly into and circumferentially all along a contacting surface of said thread for alignment of said balls selectively meshing therewith.

Conveniently, the arcuate recess tapers wide at at least one helical end of said thread for self alignment of said at least one bearing ball at meshing engagement thereof with said worm screw.

In one embodiment, the apparatus further includes a safety mechanism connected to said worm screw to prevent locking and unlocking of rotation thereof as long as said mobile component is either anchored to or released from the structure.

In one embodiment, the plurality of support blocs are arranged in a magazine movably connected to the structure to convey said support blocs along the structure in a preceding relationship relative to the worm screw.

In one embodiment, the plurality of support blocs are arranged in groups, all said support blocs of each said group simultaneously selectively being in meshing engagement with said worm screw.

Conveniently, all said support blocs of each said group simultaneously selectively being in meshing engagement with said worm screw over a 360-degree section of a thread thereof.

In one embodiment, the arc segment of said worm screw extends over a range between about ten (10) degrees and about sixty-five (65) degrees.

According to another aspect of the present invention, there is provided a scaffolding system comprising a mobile platform, an elongate tower and a load displacement apparatus as described hereinabove connected to the platform and the tower for selective displacement of the platform along the tower, characterised in that the platform and the tower form the mobile component and the fixed structure respectively.

In one embodiment, the tower includes a pair of substantially parallel elongate beams, said plurality of support blocs interconnecting said beams to one another.

In one embodiment, the tower has a peripheral wall with a longitudinal slit extending therealong and defining an open cross section of said tower, said worm screw being located inside said open cross section.

Typically, the mobile platform is located outside the tower, said mobile platform including a link structure connecting to said worm screw, said link structure extending through said longitudinal slit.

Conveniently, the system further includes at least one work platform located outside of the tower and releasably attaching thereto, said at least one work platform being releasably anchorable to the mobile platform for displacement thereof along the tower.

Typically, the mobile platform is releasably anchorable to the tower at selective positions therealong.

Conveniently, the link structure includes a safety mechanism connected thereto to prevent locking and unlocking of rotation of said worm screw as long as said mobile platform is either anchored to or released from the tower.

Other objects and advantages of the present invention will become apparent from a careful reading of the detailed description provided herein, with appropriate reference to the accompanying drawings.

### BRIEF DESCRIPTION OF THE DRAWINGS

Further aspects and advantages of the present invention will become better understood with reference to the description in association with the following Figures, in which similar references used in different Figures denote similar components, wherein:
**Figure 1** is a simplified broken side view of an embodiment of a load displacement apparatus, or scaffolding lifting mechanism, in accordance with the present invention with an external actuator with reducing gearbox;
**Figure 2** is a simplified broken section plan view of the lifting mechanism of Figure 1;
**Figure 3** is a simplified schematic broken rear perspective view a worm screw moving along support blocs with bearings of the embodiment of Figure 1;
**Figure 3a** is a simplified schematic broken exploded front perspective view of the embodiment of Figure 3;
**Figure 4** is a schematic top plan view of the embodiment of Figure 3, showing the balls of the bearing in meshing engagement with the thread of the worm screw;
**Figure 5** is an enlarged schematic exploded front perspective view of a support bloc of the embodiment of Figure 3, showing the balls of the bearing in the lower loop channel;
**Figure 6** is a simplified top plan view of the path followed by the balls of the support bloc of Figure 5;
**Figure 7** is a simplified front view of the bearing path of Figure 6;
**Figure 8** is a partially broken schematic section view taken along line 8-8 of Figure 4, showing the support bloc of the embodiment of Figure 3, showing the balls of the bearing of the support bloc in meshing engagement with the thread of the worm screw;
**Figure 9** is a view similar to Figure 2, showing another embodiment of the lifting mechanism of Figure 1 with an internal actuator and reducing planetary gearbox shown in dashed lines inside the worm screw;
**Figure 10** is a simplified broken top plan view of an embodiment of a scaffolding system in accordance with the present invention, showing an embodiment of a lifting mechanism in accordance with the present invention located inside an open tower and connected to a service platform independent of work platforms;
**Figure 11** is a simplified broken front view of the embodiment of Figure 10;
**Figure 12** is a simplified broken top plan view of another embodiment of a support bloc with a cover; and
**Figure 13** is a simplified enlarged broken section view of the embodiment of Figure 12.

### DETAILED DESCRIPTION OF THE PREFERRED EMBODIMENTS

With reference to the annexed drawings the preferred embodiments of the present invention will be herein described for indicative purpose and by no means as of limitation.

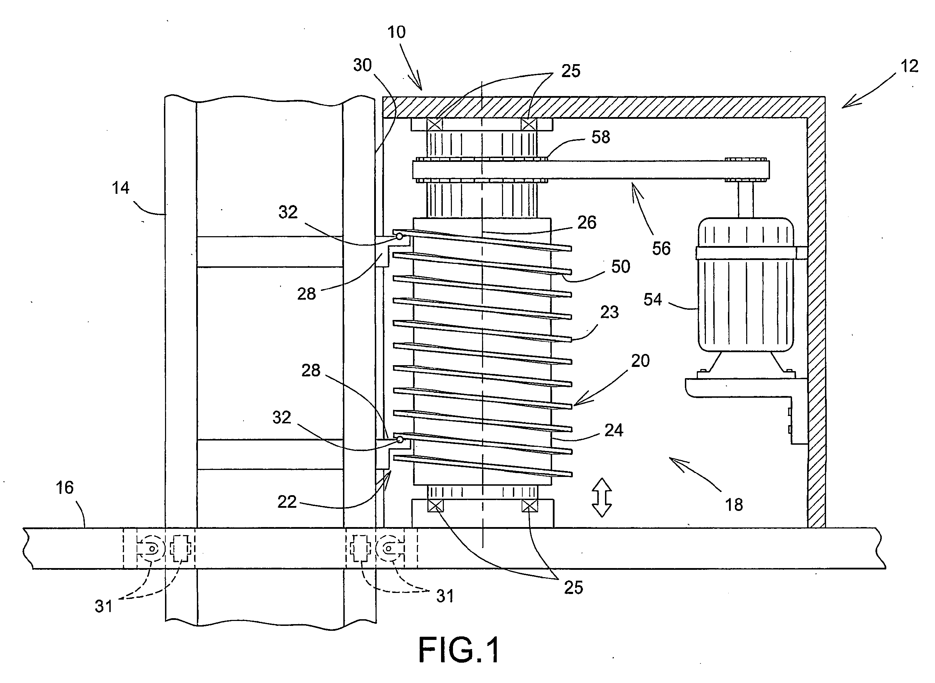

Referring to Figure 1, there is schematically shown an embodiment of a load displacement apparatus or system 10 in accordance with the present invention. Although it is obvious to one having ordinary skill in the art that the load displacement apparatus 10 could be used in many different configurations in different technical areas, only the configuration of a lifting mechanism 18 of a scaffolding system 12 will be described in further details hereinbelow.

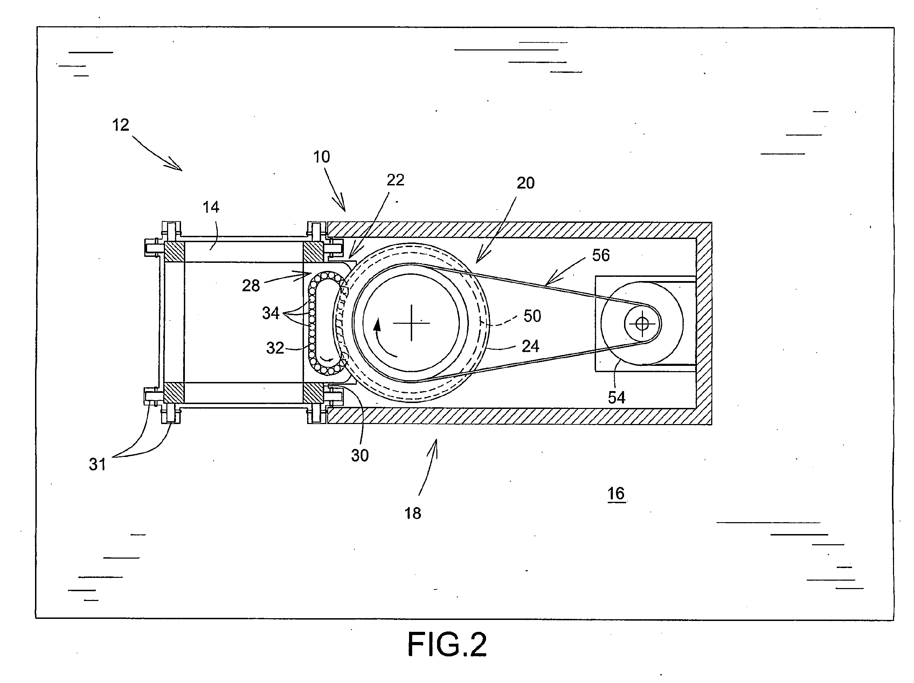

Referring more specifically to Figures 1 and 2, the scaffolding system 12 includes a generally vertically oriented tower 14 or post that supports a platform 16 movable there along. Typically, the tower 14 is rectangular in cross-section but could also be of any polygonal shape or circular shape without departing from the scope of the present invention. Typically, a mobile component 20 of a lifting mechanism 18 mounted on the platform 16 meshes with a corresponding fixed component 22 connected to the tower 14.

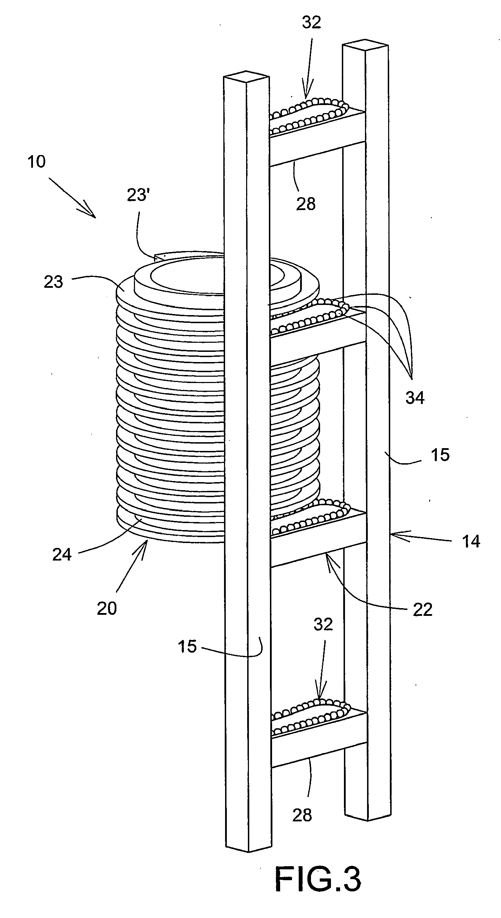

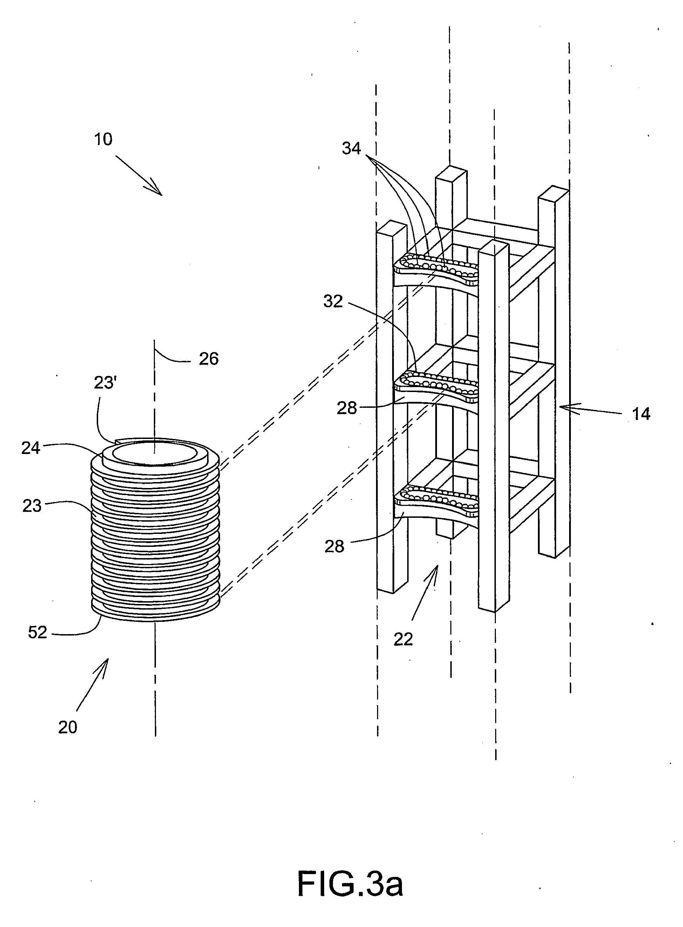

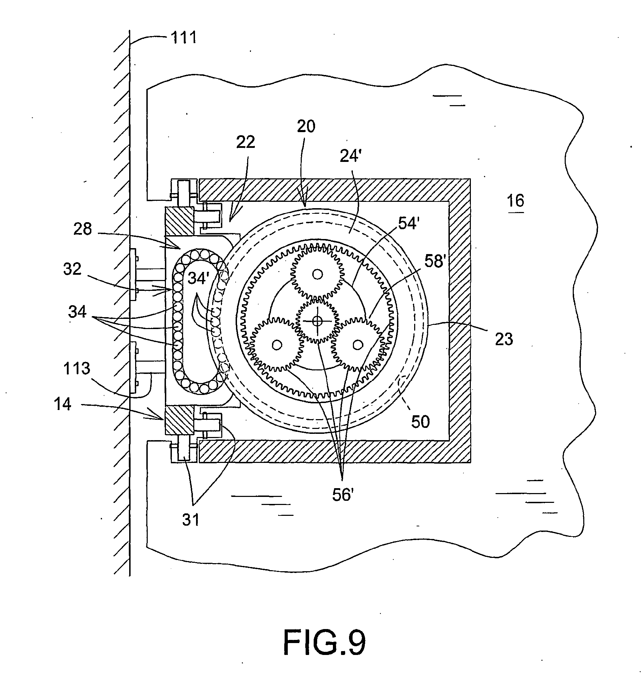

As seen more specifically in Figure 3, the mobile component 20 of the lifting mechanism 18 is typically a worm screw 24 mounted on the platform 16 via conventional roller bearings 25 or the like for free rotation about its generally vertical axis 26. The worm screw 24 is meshable with a plurality of support blocs 28 that form the fixed component 22 of the lifting mechanism 18. The support blocs 28 are typically equally spaced from one another along a side wall 30 of the tower 14 such that at least one, preferably two, support bloc 28 is fully engaged by a thread 23 of the worm screw 24 at any given longitudinal position of the platform 16 along the tower 14. The tower 14 could also include a plurality of vertical beams 15 linked together via the support blocs 28, as shown in Figures 3 and 9.

The platform 16 supporting the mobile component 20 of the lifting mechanism 18 is movably guided along the tower 14 using a guiding mechanism, typically side rollers 31, conventional in the art, or the like rollably connecting to the tower 14.

As shown in Figures 3 to 8, in order to significantly reduce the friction between the worm screw 24 and the support blocs 28, the latter includes a bearing 32, formed of at least one support or bearing ball 34 movably or rollably mounted on the support bloc 28, that extends over a contacting angular or arc segment 33 of the thread 23 of the worm screw 24 along which it is in contact therewith to support the weight of the entire platform 16 including any equipment, material or workers standing thereon during its up and down displacements along the tower 14.

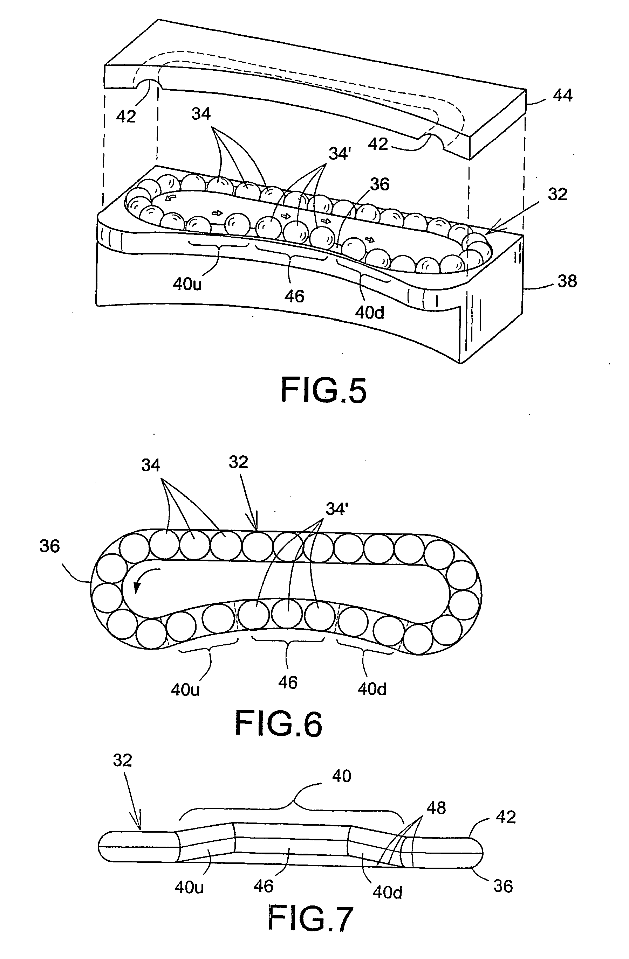

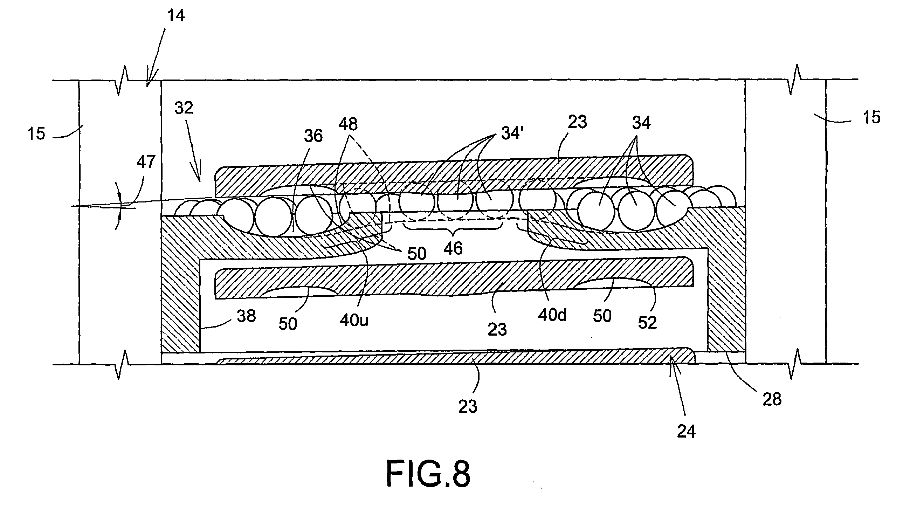

As shown in Figure 3 to 8, the bearing 32 typically includes a plurality of support balls 34 rolling within a lower open loop channel 36 at least partially, typically entirely, formed within a lower section 38 of the support bloc 28 and defining a closed-loop ball path channel. Preferably, the balls 34 have their top portion exposed along a front section 40 of the lower loop channel 36. When outside of the front section 40, the balls 34 are typically fully covered by an upper open loop channel 42 (see Figures 5 and 7) formed within an upper section 44 of the support bloc 28. Typically, the lower loop front section 40 extends over at least a contacting portion 46 of the lower loop channel 36 which corresponds to the angular segment 33 in which the balls 34' contact the worm screw 24 and support the platform 16. Obviously, the balls 34' of the bearing 32 typically lie within a plane oriented with a pitch angle similar to the pitch angle 47 of the thread 23 of the worm screw 24 it meshes with as seen in Figure 8. The closed-loop path channel followed by the balls 34 could also lie in a generally vertical plane, for substantially horizontal displacement of the worm screw in relation therewith, without departing from the scope of the present invention. In such a case, each bloc 28 would typically include a second bearing for engaging the opposite side of the thread 23 during displacement of the worm screw 24 in the reverse direction. Alternatively, a second series of blocs 28 could be used to engage the opposite side of the thread 23. Also alternatively, which case is also applicable in replacement of the bearing 32 on the figures, the bearing 32 could be in a plane substantially parallel to the screw axis 26 such that the balls 34 located at both axial ends thereof could engage the thread surface and its opposite side depending of the displacement direction of the worm screw 24 relative thereto.

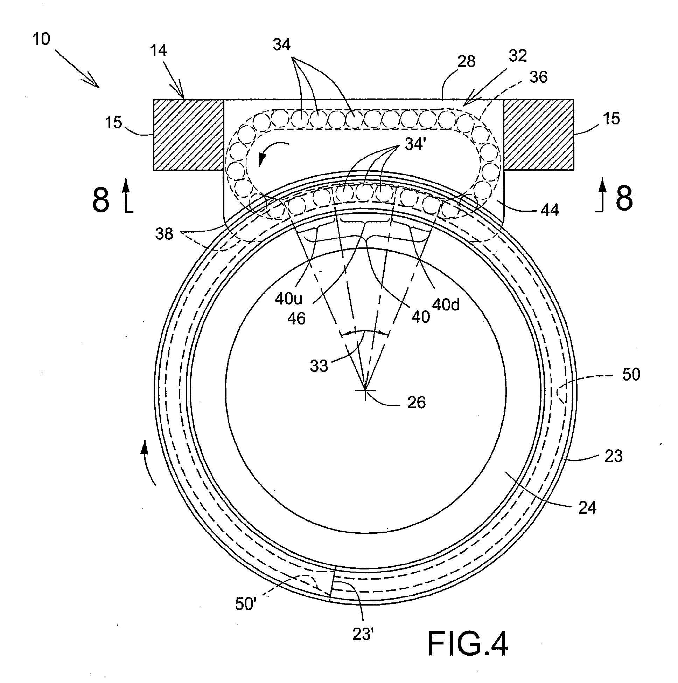

As detailed in Figure 7 and 8, the bottom wall 48 of the lower loop channel 36 is typically profiled at least over a portion of the front section 40, that includes the contacting portion 46 (see Figure 4 and 6) in which the balls 34' contact the worm screw 24, to ensure that each ball 34 successively gets into contact with the worm screw 24, one at a time, without contacting adjacent balls 34. Accordingly, just before contacting the thread 23 of the worm screw 24, a ball 34 engages an upward slope 40u of the bottom wall 48 along the angular segment 33 at a location adjacent the beginning of the contacting portion 46 to be slightly raised and displaced away from the following ball 34. The bottom wall 48 has a following downward slope 40d along the angular segment 33 at a location adjacent the end of the contacting portion 46 to allow the balls 34' to disengage from the thread 23 of the worm screw 24 and smoothly follow a return portion of the lower loop channel 36. Accordingly the balls 34 are typically spaced enough from the contacting surface of the thread 23 to be able to travel generally radially relative therefrom at both ends of the front section 40 spanning over and in register with the angular segment 33. Typically, the contacting portion 46 circumferentially extends over about ten and about twenty-five degrees (10°-25°), although it could be a singular point or even extend beyond 25°. Similarly, both the upward and the downward slopes 40u, 40d typically circumferentially extend over about ten and about twenty degrees (10°-20°). These above angle values are provided as examples only and could vary without departing from the scope of the present invention.

As shown in Figures 4 and 8, the balls 34' typically engage an arcuate recess 50 extending inwardly and circumferentially all along the contacting surface 52 of the thread 23 of the worm screw 24 to ensure proper alignment of the worm screw 24 with the support blocs 28.

In case of hazard occurring at the bearing 32 level (such as the collapse or destruction thereof), the supporting bloc 28 itself would support the load of the platform 16 and prevent the latter from falling down at incontrollable speeds because of the screw thread 23 directly engaging the support blocs 28.

As shown in Figures 1 and 2, an actuator 54 for rotating the worm screw 24 is also mounted on the platform 16 generally adjacent the worm screw 24. Typically, the actuator 54 is connected to the worm screw 24 via a reducer gearbox 56 or the like, the latter forming an actuator mechanism with the actuator 54. As it would be obvious to one skilled in the art, the actuator 54 could be any conventional actuator such as an electric motor, a stepper motor, a generator vector motor (acting as a motor in one direction and as a generator in the other), a hydraulic motor, a pneumatic motor, an internal combustion engine, a steam engine or the like. Depending of the actuator 54 considered (such as pneumatic motor or steam engine), one can have a submersible platform if required, for underwater activities such as for port installations, boatyards, shipyards, drilling platforms, large swimming pools and the like or in toxic gaseous environment working conditions.

Obviously, when used in a scaffolding system 12, the actuator 54 could only actuate the worm screw 24 in one direction to raise the platform 16 since the gravity can be used to lower the platform 16. In such a case, the lifting mechanism 18 obviously includes a brake mechanism 58 to control the rotational speed of the worm screw 24, especially during the downward displacement thereof. The brake mechanism 58 can include a plurality of parallel braking systems using conventional drum brakes, disc brakes, a safety gear (pawl or grige gear) or the like or even frictionless resistive magnetic brakes that could eventually recuperate the braking energy to recharge a battery, or magnets with non-nuclear low molecular magnetic fields (neodium magnets) or using the molecular resistance of high density antistock transmission oils or the like. The brake mechanism 58 could possibly be embedded within the gearbox 56 if preferred.

On the other hand, the actuator 54 could be a double action actuator or the gearbox 56 could include a switching mechanism (not shown) to reverse the rotation of the worm screw 24.

Alternatively, as shown in Figure 9, the actuator 54', the gearbox 56' and the brake mechanism 58' could be entirely or at least partially located inside the hollow worm screw 24'. In such a case, the gearbox 56' could be a planetary-type reducer gearbox.

Furthermore, in a situation with at least two scaffolding systems 12 assembled side-by-side, the adjacent platforms 16 mounted on adjacent towers 14 could have retractable couplings (not shown) such as telescopic splines connectable to one another to enable an operator to either control all platforms 16 with only the lifting mechanism 18 of one of the towers 14 or to synchronize the actuation of all lifting mechanisms 18 of all the towers 14.

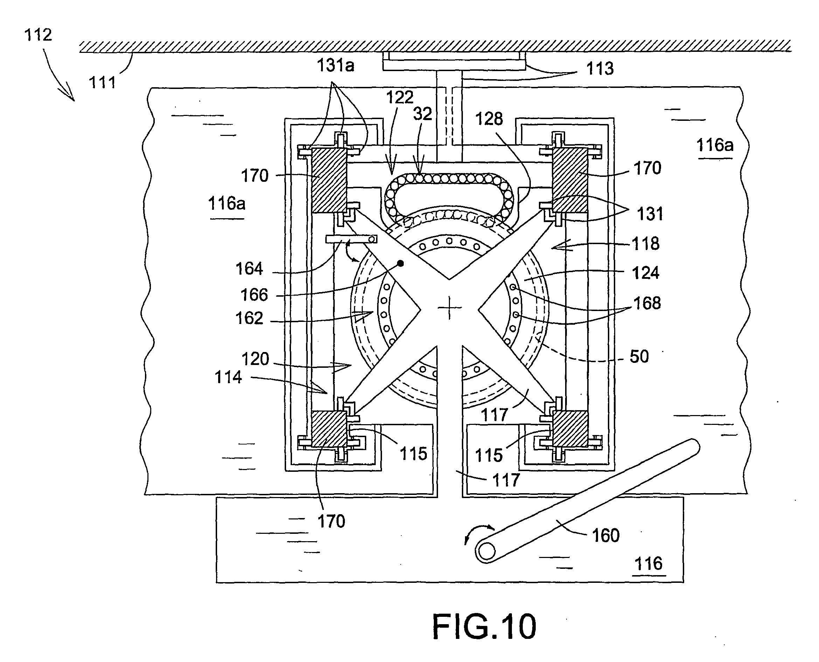

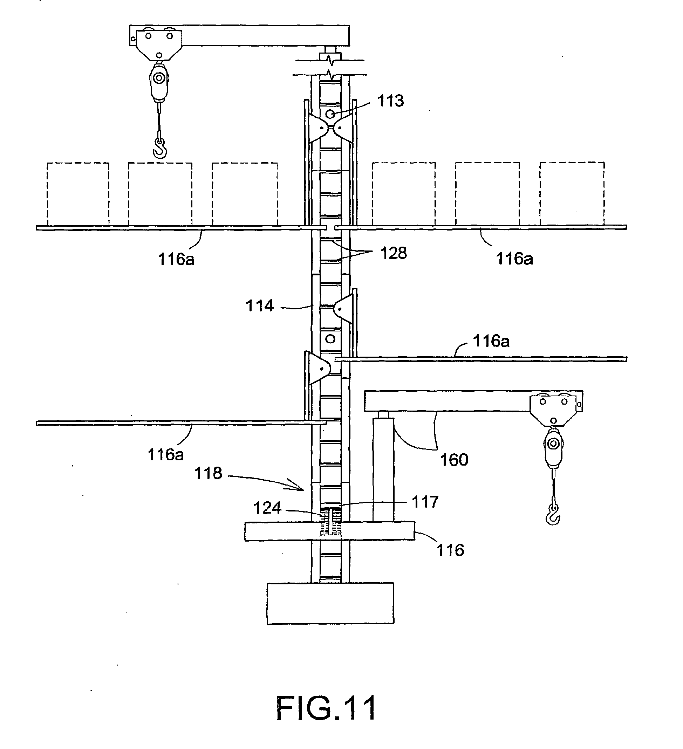

As described hereinabove, the mobile component 20 of the lifting mechanism 18 is typically mounted on the platform 16. Now referring more specifically to Figures 10 and 11, the mobile component 120 of the lifting mechanism 118 is alternatively connected to or mounted on a service platform 116. Furthermore, instead of being located outside of the tower 114, the lifting mechanism 118 is substantially located inside the limits of the generally open cross section of the tower 114 such that the peripheral wall of the open tower 114 includes at least one longitudinal slit 115 extending there along, shown in the front thereof. Such an open tower 114 could also have an H-shaped cross section (not shown) without departing from the scope of the present invention. The fixed component 122 of the lifting mechanism 118 is typically connected to an internal surface of the tower 114. A link structure 117 extending through the tower slit 115 connects the lifting mechanism 118 to the service platform 116 located outside the tower 114. When relatively long towers 114 are used, a plurality of tower anchors 113 secure the tower 114 to an adjacent building structure 111 at generally regularly spaced intervals. Typically, the tower anchors 113 connect to the tower 114 on a side generally opposite to the longitudinal slit 115.

In such a scaffolding system 112, the work platforms 116a releasably attached to the tower 114 at same levels or not are typically located on either side of the tower 114 adjacent the building structure 111 to balance the overall load supported on both sides of the tower 114, as shown in Figure 11. The service platform 116 is used first to successively displace the different work platforms 116a releasably anchored thereto up to their respective desired location along the tower 114 and release them when the work platform 116a are properly secured to the tower 114, and second to carry material and workers from/to the ground to/from the different work platforms 116a or between work platforms 116a. For example, the service platform 116 could also carry a manual or remotely operable lifting or handling arm 160 mounted thereon to lift and displace the material between the service platform 116 and the different work platforms 116a. The handling arm 160 can also serve to handle tower longitudinal sections for self-erection of the tower 114.

Typically, the service platform 116 needs to be anchored to the tower 114 to enable the anchoring of the work platform to the tower 114. A safety mechanism 162 prevents the operator from blocking and unblocking the rotation of the worm screw 124 unless the service platform 116 is either anchored to the tower 114, at any selective position there along, with platform anchors 164 being in full engagement configuration or released therefrom with the platform anchors 164 being in full released configuration.

The safety mechanism 162 includes a retractable shear pin 166 mounted on the link structure 117 and releasably engageable into one of a plurality of bore holes 168 integral with the worm screw 124 and circumferentially spaced from one another about the axis 126 thereof.

The link structure 117 supporting the mobile component 120 of the lifting mechanism 118 is movably guided along the tower 114 using a guiding mechanism, typically side rollers 131, conventional in the art, or the like rollably connecting to the tower 114.

Although shown with similar side rollers 131 a, the work platforms 116a don't really need these side rollers 131a since they are selectively carried by the service platform 116 when displaced along the tower 114 while not being supported thereby or anchored thereto.

When no side rollers 131a are used to guide the work platforms 116a along the tower 114, the shape of the work platforms 116a around the tower 114 typically at least partially follows or embraces the cross-sectional projections of the tower 114 such as corner posts 170 or the like to prevent the work platforms 116a from separating from the tower 114 and falling down in case of inadvertent disengagement of the anchor connecting the two together. In such an undesirable situation, the work platform 116a would slightly tilt relative to the tower 114 and remain hooked thereto until emergency actions are taken.

### Alternatives

To increase the load capability of the support blocks 28 could include at least one additional bearing 32 (not shown) that would lie in a substantially parallel path relative to the other over a substantially similar angular segment 33. Accordingly, one of the lower loop channels 36 would fully enclose the other one.

Alternatively, the bearing 32 could includes only one ball 34 rotatably mounted on a shaft (or two coaxial shafts) generally perpendicular to the thread 23 of the worm screw 24. Furthermore, the ball 34 could be a roller rotatably mounted on a shaft extending there through with an arcuate contacting surface to prevent wear thereof during rolling engagement with the thread 23 of the worm screw 24.

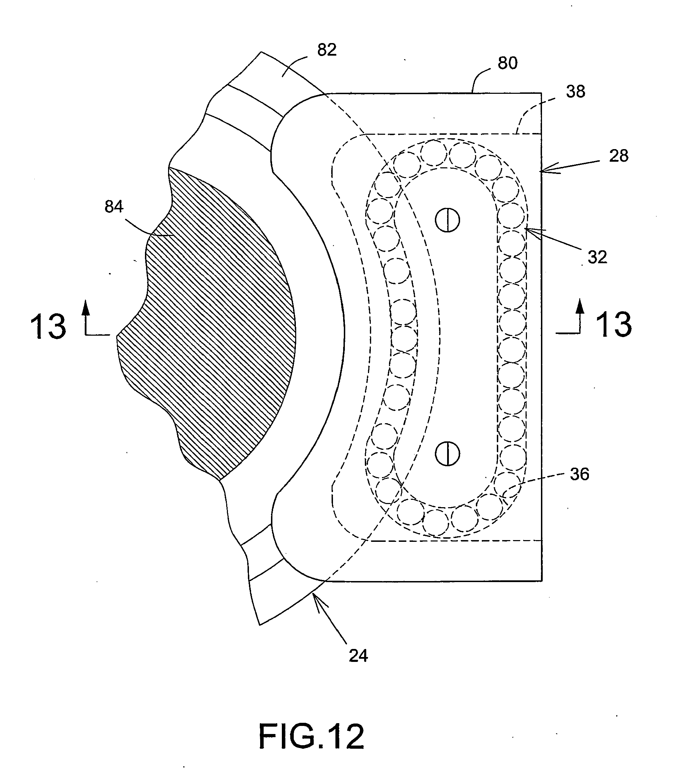

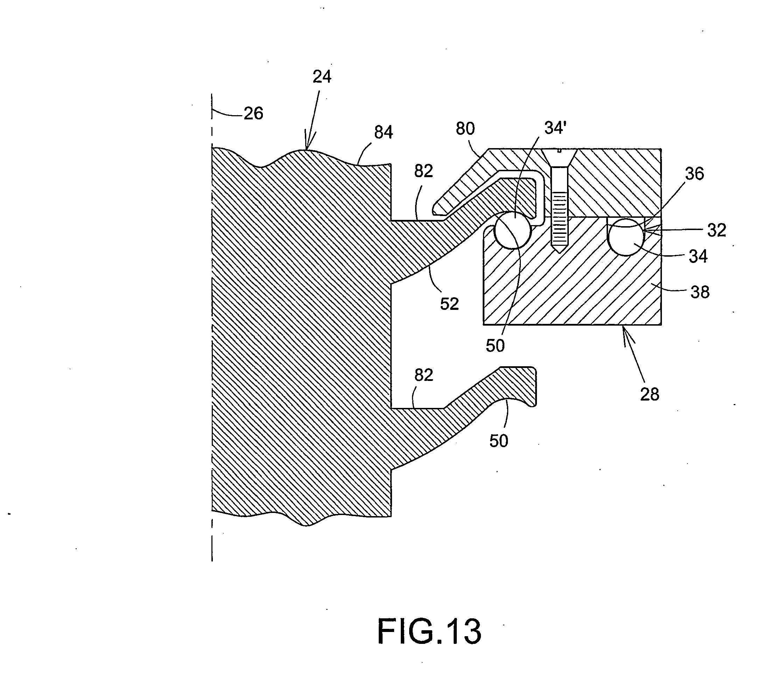

As illustrated in Figures 12 and 13, each support bloc 28 could include a bearing cover 80, or extended upper section, to protect the bearing 32 or balls 34 from the different weather conditions. The bearing cover is either permanent and spaced from the balls 34 to allow the thread 23 of the worm screw 24 to pass there between when in meshing engagement with the balls 34, or movable (not shown) between a bearing covering position when the support bloc 28 is not in meshing engagement with the worm screw 24 and an open configuration away from the bearing when the support bloc 28 is in meshing engagement with the worm screw 24. The cover 80 is typically shaped to get around or partially follow a shaped thread 82 that protrudes radially, outwardly and upwardly from the worm screw body 84. Such a cover 80 generally extends laterally (circumferentially and radially) beyond the support bloc 28 to fully protect the bearing 32 therein.

For heavy duty lifting mechanism 18, the support blocs 28 could be arranged in groups (not shown) of preferably three blocs 28 typically simultaneously engaging a same 360-degree section thread 23 of the worm screw 24. Each bloc group would typically cover an overall segment large enough (such as about 240 degrees with the three blocs 28 spaced about 120 degrees from each other) not only to ensure the engagement of the worm screw 24 with the group of support blocs 28 but also to further ensure longitudinal guiding of platform 16 relative to the tower 14 and forming the guiding mechanism instead of the side rollers 31. The bloc groups are obviously spaced from one another, typically equally, such that at least one group is in good engagement with a same 360-degree section thread 23 of the worm screw 24 at any location along the tower 14.

Although not illustrated in the Figures, a plurality of support blocs 28 could also be arranged in a loop tray or magazine of support blocs 28 movably connected to the tower 14 that would be conveyed along the tower 14 in parallel to the worm screw 24 by always preceding the latter (in either up and down directions). The support blocs 28 would slidably engage and disengage successive bloc receptacles spaced apart from one another along the tower 14. The fine alignment of the support blocs 28 with the thread 23 of the worm screw 24 could be ensure by the balls 34' engaging the arcuate recess 50 extending inwardly and all along the contacting surface 52 of the thread 23, or the like alignment mechanism.

As partially shown by numeral reference 50' in Figure 4, both helical ends 23' of the thread 23 of the worm screw 24 taper wide, radially, circumferentially and/or axially, to ensure a smooth and gradual meshing engagement of the bearings 32 of the different support blocs 28 that may not be perfectly aligned. In doing so, the balls 34' will self align because of the arcuate widen recess 50' of the contacting surface 52 of the worm screw 24.

## Claims

1. A load displacement apparatus (10) for displacing a mobile component (20) along an elongate fixed structure (22), said apparatus (10) comprising:
- a worm screw (24) mountable on the mobile component (20) for rotation about a screw axis (26); and
- a plurality of support blocs (28) mountable on the structure (22), said support blocs (28) being spaced apart from one another along the structure (22) to be successively in meshing engagement with said worm screw (24) for movably supporting the mobile component (20) along the structure (22), **characterised in that** each said support bloc (28) includes a plurality of freely movable bearing balls (34), mounted thereon said bearing balls (34) located within a closed-loop ball path channel (36) formed into said support bloc (28) and defining a contacting portion (46) thereof spanning over and in register with an arc segment (33) of the worm screw (24), at least one of said plurality of bearing balls (34) successively and movably engaging said worm screw (24) over said arc segment (33) thereof, whereby said worm screw (24) is always in meshing engagement with at least one of said plurality of support blocs (28).

2. The apparatus (10) of claim 2, **characterised in that** a bottom wall (48) of said closed-loop ball path channel (36) is profiled.

3. The apparatus (10) of claim 2, **characterised in that** said contacting portion (46) of said bottom wall (48) is raised relative to the remaining portion thereof so as to allow only said bearing balls (34') located over said contacting portion (46) to be in meshing engagement with said worm screw (24).

4. The apparatus (10) of claim 3, **characterised in that** said contacting portion (46) of said bottom wall (48) is spaced from the remaining portion thereof by an upward slope section (40u) and a downward slope section (40d) located therebetween, said contacting portion (46) with said upward and downward slope sections (40u,40d) forming a front section (40) of said closed-loop ball path channel (36).

5. The apparatus (10) of claim 4, **characterised in that** at least a top portion of the bearing balls (34) located within said front section (40) of said closed-loop ball path channel (36) are exposed to selectively contact said worm screw (24).

6. The apparatus (10) of anyone of claims 1 to 5, **characterised in that** each said support bloc (28) includes a lower section (38) and an upper section (44), said closed-loop ball path channel (36) being formed at least partially within said lower section (38), said upper section (44) at least partially covering said closed-loop ball path channel (36).

7. The apparatus (10) of claim 6, **characterised in that** said upper section (80) extends laterally beyond said lower section (38) for protection of said plurality of bearing balls (34) against weather conditions.

8. The apparatus (10) of anyone of claims 6 and 7, **characterised in that** said upper section (80) is shaped so as to follow a shaped thread (82) of said worm screw (24).

9. The apparatus (10) of anyone of claims 1 to 8, **characterised** further by an actuator mechanism (54,56) connecting to said worm screw (24) for selectively actuating rotation thereof.

10. The apparatus (10) of claim 9, **characterised in that** said worm screw (24) is a hollow screw (24'), said actuator mechanism (54',56') mounting inside said hollow screw (24') for selective actuation thereof.

11. The apparatus (10) of anyone of claims 1 to 10, **characterised in that** said worm screw (24) includes at least one thread (23) helically extending therearound, said thread (23) having an arcuate recess (50) extending inwardly into and circumferentially all along a contacting surface (52) of said thread (23) for alignment of said balls (34) selectively meshing therewith.

12. The apparatus (10) of claim 11, **characterised in that** said arcuate recess (50') tapers wide at at least one helical end (23') of said thread (23) for self alignment of said at least one bearing ball (34) at meshing engagement thereof with said worm screw (24).

13. The apparatus (10) of anyone of claims 1 to 12, **characterised** further by a safety mechanism (162) connected to said worm screw (24) to prevent locking and unlocking of rotation thereof as long as said mobile component (20) is either anchored to or released from the structure (22).

14. The apparatus (10) of anyone of claims 1 to 13, **characterised in that** said plurality of support blocs (28) are arranged in a magazine movably connected to the structure (22) to convey said support blocs (28) along the structure (22) in a preceding relationship relative to the worm screw (24).

15. The apparatus (10) of anyone of claims 1 to 14, **characterised in that** said plurality of support blocs (28) are arranged in groups, all said support blocs (28) of each said group simultaneously selectively being in meshing engagement with said worm screw (24).

16. The apparatus (10) of claim 15, **characterised in that** all said support blocs (28) of each said group simultaneously selectively being in meshing engagement with said worm screw (24) over a 360-degree section of the thread (23) thereof.

17. The apparatus (10) of anyone of claims 1 to 16, **characterised in that** said arc segment (33) of said worm screw (24) extends over a range between about ten (10) degrees and about sixty-five (65) degrees.

18. A scaffolding system (12) comprising a mobile platform (16), an elongate tower (14) and a load displacement apparatus (10) as claimed in anyone of claims 1 to 17 connected to the platform (16) and the tower (14) for selective displacement of the platform (16) along the tower (14), **characterised in that** the platform (16) and the tower (14) form the mobile component (20) and the fixed structure (22) respectively.

19. The system (12) of claim 18, **characterised in that** said tower (14) includes a pair of substantially parallel elongate beams (15), said plurality of support blocs (28) interconnecting said beams (15) to one another.

20. The system (112) of claim 19, **characterised in that** said tower (114) has a peripheral wall (30) with a longitudinal slit (115) extending therealong and defining an open cross section of said tower (114), said worm screw (124) being located inside said open cross section.

21. The system (112) of claim 20, **characterised in that** the mobile platform (116) is located outside the tower (114), said mobile platform (116) including a link structure (117) connecting to said worm screw (124), said link structure (117) extending through said longitudinal slit (115).

22. The system (112) of claim 21, **characterized** further by at least one work platform (116a) located outside of the tower (114) and releasably attaching thereto, said at least one work platform (116a) being releasably anchorable to the mobile platform (116) for displacement thereof along the tower (114).

23. The system (112) of anyone of claims 21 and 22, **characterised in that** the mobile platform (116) is releasably anchorable to the tower (114) at selective positions therealong.

24. The system (112) of claim 23, **characterised in that** said link structure (117) includes a safety mechanism (162) connected thereto to prevent locking and unlocking of rotation of said worm screw (124) as long as said mobile platform (116) is either anchored to or released from the tower (114).

## Patentansprüche

1. Lastverschiebungsvorrichtung (10) zum Verschieben einer verfahrbaren Komponente (20) entlang einer feststehenden Struktur (22), wobei die Vorrichtung (10) umfasst:
- eine Schneckenschraube (24), die auf der verfahrbaren Komponente (20) zur Drehung um eine Schraubenachse (26) montiert werden kann; und
- eine Mehrzahl von Tragblöcken (28), die auf der Struktur (22) montiert werden können, wobei die Tragblöcke (28) entlang der Struktur (22) voneinander beabstandet sind, um nacheinander mit der Schneckenschraube (24) zum beweglichen Tragen der verfahrbaren Komponente (20) entlang der Struktur (22) in Eingriff zu stehen, **dadurch gekennzeichnet, dass** jeder Tragblock (28) eine Mehrzahl von frei beweglichen Lagerkugeln (34) darauf montiert aufweist, wobei die Lagerkugeln (34) innerhalb eines Kugellaufbahnkanals (36) in Form eines geschlossenen Kreises angeordnet sind, der in den Tragblock (28) geformt ist und einen Kontaktabschnitt (46) davon definiert, der sich über und in Lagegenauigkeit mit einem Bogensegment (33) der Schneckenschraube (24) erstreck, wobei mindestens eine der Mehrzahl von Lagerkugeln (34) nacheinander und beweglich in die Schneckenschraube (24) über das Bogensegment (33) davon eingreift, wodurch die Schneckenschraube (24) stets mit mindestens einem der Mehrzahl von Tragblöcken (28) in Eingriff steht.

2. Vorrichtung (10) nach Anspruch 1, **dadurch gekennzeichnet, dass** eine Bodenwand (48) des Kugellaufbahnkanals (36) in Form eines geschlossenen Kreises profiliert ist.

3. Vorrichtung (10) nach Anspruch 2, **dadurch gekennzeichnet, dass** der Kontaktabschnitt (46) der Bodenwand (48) in Bezug auf den restlichen Abschnitt davon erhöht ist, um zu ermöglichen, dass nur die Lagerkugeln (34'), die sich über dem Kontaktabschnitt (46) befinden, mit der Schneckenschraube (24) in Eingriff stehen (24).

4. Vorrichtung (10) nach Anspruch 3, **dadurch gekennzeichnet, dass** der Kontaktabschnitt (46) der Bodenwand (48) vom restlichen Abschnitt davon durch einen ansteigenden Neigungsabschnitt (40u) und einen absteigenden Neigungsabschnitt (40d) dazwischen befindlich beabstandet ist, wobei der Kontaktabschnitt (46) mit den an- und absteigenden Neigungsabschnitten (40u, 40d) einen vorderen Abschnitt (40) des Kugellaufbahnkanals (36) in Form eines geschlossenen Kreises bildet.

5. Vorrichtung (10) nach Anspruch 4, **dadurch gekennzeichnet, dass** mindestens ein oberer Abschnitt der Lagerkugeln (34), die sich innerhalb des vorderen Abschnitts (40) des Kugellaufbahnkanals (36) in Form eines geschlossenen Kreises befinden, frei liegt, um mit der Schneckenschraube (24) selektiv in Kontakt zu treten.

6. Vorrichtung (10) nach einem der Ansprüche 1 bis 5, **dadurch gekennzeichnet, dass** jeder Tragblock (28) einen unteren Abschnitt (38) und einen oberen Abschnitt (44) umfasst, wobei der Kugellaufbahnkanal (36) in Form eines geschlossenen Kreises wenigstens teilweise innerhalb des unteren Abschnitts (38) ausgebildet ist, und der obere Abschnitt (44) den Kugellaufbahnkanal (36) in Form eines geschlossenen Kreises wenigstens teilweise abdeckt.

7. Vorrichtung (10) nach Anspruch 6, **dadurch gekennzeichnet, dass** sich der obere Abschnitt (80) zum Schutz der Mehrzahl von Lagerkugeln (34) gegen Wetterbedingungen seitlich über den unteren Abschnitt (38) hinaus erstreckt.

8. Vorrichtung (10) nach einem der Ansprüche 6 und 7, **dadurch gekennzeichnet, dass** der obere Abschnitt (80) derart geformt ist, dass er einem geformten Gewinde (82) der Schneckenschraube (24) folgt.

9. Vorrichtung (10) nach einem der Ansprüche 1 bis 8, ferner **gekennzeichnet durch** einen Antriebsmechanismus (54, 56), der mit der Schneckenschraube (24) zum selektiven Antreiben der Drehung davon verbunden ist.

10. Vorrichtung (10) nach Anspruch 9, **dadurch gekennzeichnet, dass** die Schneckenschraube (24) eine Hohlschraube (24') ist, wobei der Antriebsmechanismus (54',56') innerhalb der Hohlschraube (24') zum selektiven Antrieb davon untergebracht ist.

11. Vorrichtung (10) nach einem der Ansprüche 1 bis 10, **dadurch gekennzeichnet, dass** die Schneckenschraube (24) mindestens ein Gewinde (23) umfasst, das sich schneckenförmig darum herum erstreckt, wobei das Gewinde (23) eine bogenförmige Aussparung (50) aufweist, die sich nach innen in eine Kontaktfläche (52) des Gewindes (23) und entlang des gesamten Umfangs derselben zur Ausrichtung der Kugeln (34) erstreckt, die selektiv darin eingreifen.

12. Vorrichtung (10) nach Anspruch 11, **dadurch gekennzeichnet, dass** sich die bogenförmige Aussparung (50') an mindestens einem schneckenförmigen Ende (23') des Gewindes (23) zur Ausrichtung der mindestens einen Lagerkugel (34) beim Eingriff davon mit der Schneckenschraube (24) konisch erweitert.

13. Vorrichtung (10) nach einem der Ansprüche 1 bis 12, ferner **gekennzeichnet durch** einen Sicherheitsmechanismus (162), der mit der Schneckenschraube (24) verbunden ist, um ein Ver- und Entriegeln der Drehung davon zu verhindern, solange die verfahrbare Komponente (20) entweder an der Struktur (22) verankert oder davon gelöst ist.

14. Vorrichtung (10) nach einem der Ansprüche 1 bis 13, **dadurch gekennzeichnet, dass** die Mehrzahl von Tragblöcken (28) in einem Magazin angeordnet ist, das beweglich mit der Struktur (22) verbunden ist, um die Tragblöcke (28) entlang der Struktur (22) in einer vorangehenden Beziehung in Bezug auf die Schneckenschraube (24) zu befördern.

15. Vorrichtung (10) nach einem der Ansprüche 1 bis 14, **dadurch gekennzeichnet, dass** die Mehrzahl von Tragblöcken (28) in Gruppen angeordnet ist, wobei alle Tragblöcke (28) jeder Gruppe gleichzeitig selektiv mit der Schneckenschraube (24) in Eingriff stehen.

16. Vorrichtung (10) nach Anspruch 15, **dadurch gekennzeichnet, dass** alle Tragblöcke (28) jeder Gruppe gleichzeitig selektiv mit der Schneckenschraube (24) über einen 360-Grad-Abschnitt des Gewindes (23) davon in Eingriff stehen.

17. Vorrichtung (10) nach einem der Ansprüche 1 bis 16, **dadurch gekennzeichnet, dass** sich das bogenförmige Segment (33) der Schneckenschraube (24) über einen Bereich zwischen etwa zehn (10) Grad und etwa fünfundsechzig (65) Grad erstreckt.

18. Gerüstsystem (12), umfassend eine verfahrbare Plattform (16), einen länglichen Turm (14) und eine Lastverschiebungsvorrichtung (10) nach einem der Ansprüche 1 bis 17, die mit der Plattform (16) und dem Turm (14) zur selektiven Verschiebung der Plattform (16) entlang des Turms (14) verbunden ist, **dadurch gekennzeichnet, dass** die Plattform (16) und der Turm (14) die verfahrbare Komponente (20) beziehungsweise die feststehende Struktur (22) bilden.

19. System (12) nach Anspruch 18, **dadurch gekennzeichnet, dass** der Turm (14) ein Paar von im Wesentlichen parallelen länglichen Balken (15) umfasst, wobei die Mehrzahl von Tragblöcken (28) die Balken (15) miteinander verbindet.

20. System (112) nach Anspruch 19, **dadurch gekennzeichnet, dass** der Turm (114) eine umfängliche Wand (30) mit einem Längsschlitz (115) aufweist, der sich daran entlang erstreckt und einen offenen Querschnitt des Turms (114) definiert, wobei sich die Schraubenschnecke (124) innerhalb des offenen Querschnitts befindet.

21. System (112) nach Anspruch 20, **dadurch gekennzeichnet, dass** sich die verfahrbare Plattform (116) außerhalb des Turms (114) befindet, wobei die verfahrbare Plattform (116) eine Verbindungsstruktur (117) umfasst, die an die Schraubenschnecke (124) anschließt, wobei sich die Verbindungsstruktur (117) durch den Längsschlitz (115) erstreckt.

22. System (112) nach Anspruch 21, ferner **gekennzeichnet durch** mindestens eine Arbeitsplattform (116a), die sich außerhalb des Turms (114) befindet und lösbar daran befestigt ist, wobei die mindestens eine Arbeitsplattform (116a) an der verfahrbaren Plattform (116) zur Verschiebung davon entlang des Turms (114) lösbar verankert werden kann.

23. System (112) nach einem der Ansprüche 21 und 22, **dadurch gekennzeichnet, dass** die verfahrbare Plattform (116) am Turm (114) an selektiven Positionen daran entlang lösbar verankert werden kann.

24. System (112) nach Anspruch 23, **dadurch gekennzeichnet, dass** die Struktur (117) einen Sicherheitsmechanismus (162) umfasst, der damit verbunden ist, um ein Ver- und Entriegeln der Schneckenschraube (124) zu verhindern, solange die verfahrbare Plattform (116) entweder am Turm (114) verankert oder davon gelöst ist.

## Revendications

1. Appareil de déplacement de charge (10) pour déplacer un composant mobile (20) le long d'une structure fixe allongée (22), ledit appareil (10) comprenant :
une vis sans fin (24) pouvant être montée sur le composant mobile (20) pour tourner autour d'un axe de vis (26) ; et
une pluralité de blocs de support (28) pouvant être montés sur la structure (22), lesdits blocs de support (28) étant espacés les uns des autres le long de la structure (22) pour être successivement en mise en prise par engrènement avec ladite vis sans fin (24) afin de supporter de manière mobile le composant mobile (20) le long de la structure (22), **caractérisé en ce que** chacun desdits blocs de support (28) comprend une pluralité de roulements à billes (34) mobiles, montés sur ce dernier, lesdits roulements à billes (34) étant positionnés à l'intérieur d'un canal de passage de billes en boucle fermée (36) formé dans ledit bloc de support (28) et définissant sa partie de contact (46) couvrant et alignée avec un segment d'arc (33) de la vis sans fin (24), au moins l'un de ladite pluralité de roulements à billes (34) mettant en prise successivement et de manière mobile ladite vis sans fin (24) sur son dit segment d'arc (33), moyennant quoi ladite vis sans fin (24) est toujours en mise en prise par engrènement avec au moins l'un de ladite pluralité de blocs de support (28).

2. Appareil (10) selon la revendication 2, **caractérisé en ce qu'**une paroi inférieure (48) dudit canal de passage de billes en boucle fermée (36) est profilée.

3. Appareil (10) selon la revendication 2, **caractérisé en ce que** ladite partie de contact (46) de ladite paroi inférieure (48) est levée par rapport à sa partie résiduelle afin de permettre uniquement audit roulement à billes (34') positionné sur ladite partie de contact (46) d'être en mise en prise par engrènement avec ladite vis sans fin (24).

4. Appareil (10) selon la revendication 3, **caractérisé en ce que** ladite partie de contact (46) de ladite paroi inférieure (48) est espacée de sa partie résiduelle par une section en pente ascendante (40u) et une section en pente descendante (40d) positionnées entre elles, ladite partie de contact (46) avec lesdites sections en pente ascendante et descendante (40u, 40d) formant une section avant (40) dudit canal de passage de billes en boucle fermée (36).

5. Appareil (10) selon la revendication 4, **caractérisé en ce qu'**au moins une partie supérieure desdits roulements à billes (34) positionnés à l'intérieur de ladite section avant (40) dudit canal de passage de billes en boucle fermée (36) est exposée pour entrer sélectivement en contact avec ladite vis sans fin (24).

6. Appareil (10) selon l'une quelconque des revendications 1 à 5, **caractérisé en ce que** chacun desdits blocs de support (28) comprend une section inférieure (38) et une section supérieure (44), ledit canal de passage de billes en boucle fermée (36) étant formé au moins partiellement à l'intérieur de ladite section inférieure (38), ladite section supérieure (44) recouvrant au moins partiellement ledit canal de passage de billes en boucle fermée (36).

7. Appareil (10) selon la revendication 6, **caractérisé en ce que** ladite section supérieure (80) s'étend latéralement au-delà de ladite section inférieure (38) pour la protection de ladite pluralité de roulements à billes (34) contre les conditions climatiques.

8. Appareil (10) selon l'une quelconque des revendications 6 et 7, **caractérisé en ce que** ladite section supérieure (80) est formée afin de suivre un filetage formé (82) de ladite vis sans fin (24).

9. Appareil (10) selon l'une quelconque des revendications 1 à 8, **caractérisé en outre par** un mécanisme d'actionneur (54, 56) se raccordant à ladite vis sans fin (24) pour actionner sélectivement sa rotation.

10. Appareil (10) selon la revendication 9, **caractérisé en ce que** ladite vis sans fin (24) est une vis creuse (24'), ledit mécanisme d'actionneur (54', 56') se montant à l'intérieur de ladite vis creuse (24') pour son actionnement sélectif.

11. Appareil (10) selon l'une quelconque des revendications 1 à 10, **caractérisé en ce que** ladite vis sans fin (24) comprend au moins un filetage (23) s'étendant de manière hélicoïdale autour de cette dernière, ledit filetage (23) ayant un évidement arqué (50) s'étendant vers l'intérieur dans et circonférentiellement tout le long d'une surface de contact (52) dudit filetage (23) pour l'alignement desdites billes (34) sélectivement engrenées avec cette dernière.

12. Appareil (10) selon la revendication 11, **caractérisé en ce que** ledit évidement arqué (50') se rétrécit progressivement au niveau d'au moins une extrémité hélicoïdale (23') dudit filetage (23) pour l'auto-alignement dudit au moins un roulement à billes (34) au niveau de sa mise en prise par engrènement avec ladite vis sans fin (24).

13. Appareil (10) selon l'une quelconque des revendications 1 à 12, **caractérisé en outre par** un mécanisme de sécurité (162) raccordé à ladite vis sans fin (24) pour empêcher le blocage et le déblocage de sa rotation tant que ledit composant mobile (20) est ancré à ou libéré de la structure (22).

14. Appareil (10) selon l'une quelconque des revendications 1 à 13, **caractérisé en ce que** ladite pluralité de blocs de support (28) est agencée dans un magasin raccordé de manière mobile à la structure (22) pour transporter lesdits blocs de support (28) le long de la structure (22) dans une relation précédente par rapport à la vis sans fin (24).

15. Appareil (10) selon l'une quelconque des revendications 1 à 14, **caractérisé en ce que** ladite pluralité de blocs de support (28) sont agencés en groupes, la totalité desdits blocs de support (28) de chacun desdits groupes étant sélectivement simultanément en mise en prise par engrènement avec ladite vis sans fin (24).

16. Appareil (10) selon la revendication 15, **caractérisé en ce que** la totalité desdits blocs de support (28) de chacun desdits groupes est sélectivement simultanément en mise en prise par engrènement avec ladite vis sans fin (24) sur une section de 360 degrés de son filetage (23).

17. Appareil (10) selon l'une quelconque des revendications 1 à 16, **caractérisé en ce que** ledit segment d'arc (33) de ladite vis sans fin (24) s'étend sur une plage comprise entre environ dix (10) degrés et environ soixante-cinq (65) degrés.

18. Système d'échafaudage (12) comprenant une plateforme mobile (16), une tour allongée (14) et un appareil de déplacement de charge (10) selon l'une quelconque des revendications 1 à 17, raccordé à la plateforme (16) et à la tour (14) pour le déplacement sélectif de la plateforme (16) le long de la tour (14), **caractérisé en ce que** la plateforme (16) et la tour (14) forment le composant mobile (20) et la structure fixe (22) respectivement.

19. Système (12) selon la revendication 18, **caractérisé en ce que** ladite tour (14) comprend une paire de poutres allongées (15) sensiblement parallèles, ladite pluralité de blocs de support (28) interconnectant lesdites poutres (15) entre elles.

20. Système (112) selon la revendication 19, **caractérisé en ce que** ladite tour (114) a une paroi périphérique (30) avec une fente longitudinale (115) s'étendant le long de cette dernière et définissant une section transversale ouverte de ladite tour (114), ladite vis sans fin (124) étant positionnée à l'intérieur de ladite section transversale ouverte.

21. Système (112) selon la revendication 20, **caractérisé en ce que** la plateforme mobile (116) est positionnée à l'extérieur de la tour (114), ladite plateforme mobile (116) comprenant une structure de liaison (117) se raccordant à ladite vis sans fin (124), ladite structure de liaison (117) s'étendant à travers ladite fente longitudinale (115).

22. Système (112) selon la revendication 21, **caractérisé en outre par** au moins une plateforme de travail (116a) positionnée à l'extérieur de la tour (114) et se fixant de manière amovible à cette dernière, ladite au moins une plateforme de travail (116a) pouvant être ancrée de manière amovible à la plateforme mobile (116) pour son déplacement le long de la tour (114).

23. Système (112) selon l'une quelconque des revendications 21 et 22, **caractérisé en ce que** la plateforme mobile (116) peut être ancrée de manière amovible à la tour (114) dans des positions sélectives le long de cette dernière.

24. Système (112) selon la revendication 23, **caractérisé en ce que** ladite structure de liaison (117) comprend un mécanisme de sécurité (162) raccordé à cette dernière pour empêcher le blocage et le déblocage de la rotation de ladite vis sans fin (124) tant que ladite plateforme mobile (116) est ancrée à ou libérée de la tour (114).
